# EUROPEAN PATENT APPLICATION

(11) **EP 2 819 406 A1**
(43) Date of publication of application: **31.12.2014**
(21) Application number: 12869138.3
(22) Date of filing: 24.02.2012
(51) Int. Cl.: H04N 7/173

(54) **CONTENT DISPLAY DEVICE**

(71) Applicant: Hitachi Maxell, Ltd., Ibaraki-shi, Osaka 567-8567 (JP)
(72) Inventor: KOREEDA, Hiroyuki, Yokohama-shi Kanagawa 244-0817 (JP)
(74) Representative: Calderbank, Thomas Roger
(86) International application number: PCT/JP2012/001264
(87) International publication number: WO 2013/124902

(57) **Abstract**

A content display apparatus and a content display method which makes it possible to display an available application while displaying a video image are provided.

The content display apparatus includes a display control unit configured to display a user interface of a video and an application on a screen, wherein the display control unit divides the screen into a first region on which the video is reduced and displayed, a second region on which a list of applications is displayed, and a third region on which detailed information of a selected application among the applications is displayed, the second region and the third region being superimposed, and wherein the list of applications is displayed on the third region in an operation state of the list of applications, and a list of application display screens is displayed on the second region in an operation state of the list of application display screens.

## Description

### Technical Field

The present invention relates to a content display apparatus.

### Background Art

In the present technical field, a display method of a menu, in which an Internet application is displayed on a display apparatus of an information terminal and is activated, is disclosed (see PTL 1).

### Citation List

### Patent Literature

PTL 1: JP 2001-188672 A

### Summary of Invention

### Technical Problem

In PTL 1, a registered application is displayed as an icon or the like on a launcher menu screen and a selected application is activated. However, it is not considered to display an available application while displaying a video image.

Thus, a purpose of the present invention is to provide a content display apparatus and a content display method which make it possible to display an available application while displaying a video image.

### Solution to Problem

To solve the problem above, one preferable aspect of the present invention is as follows. The content display apparatus includes a display control unit configured to display a user interface of a video and an application on a screen, wherein the display control unit divides the screen into a first region on which the video is reduced and displayed, a second region on which a list of applications is displayed, and a third region on which detailed information of a selected application among the applications is displayed, the second region and the third region being superimposed, and wherein the list of applications is displayed on the third region in an operation state of the list of applications, and a list of application display screens is displayed on the second region in an operation state of the list of application display screens.

### Advantageous Effects of Invention

According to the present invention, it is possible to provide a content display apparatus and a content display method which make it possible to display an available application while displaying a video image.

### Brief Description of Drawings

[FIG. 1] FIG. 1 is a configuration example of a content transmission/reception system;
[FIG. 2] FIG. 2 is a configuration example of a distribution system;
[FIG. 3] FIG. 3 is a configuration example of a content display apparatus;
[FIG. 4] FIG. 4 is a configuration example of a remote controller of the content display apparatus;
[FIG. 5] FIG. 5 is a video display example of the content display apparatus;
[FIG. 6] FIG. 6 is a system flowchart of the content display apparatus;
[FIG. 7] FIG. 7 is a display example of a widget system in the content display apparatus;
[FIG. 8] FIG. 8 is an operation flowchart of the widget system;
[FIG. 9] FIG. 9 is an operation flowchart of an app menu of the widget system;
[FIG. 10] FIG. 10 is a display example of the widget system in the content display apparatus;
[FIG. 11] FIG. 11 is an operation flowchart of a widget list of the widget system;
[FIG. 12] FIG. 12 is a configuration example of application metadata;
[FIG. 13] FIG. 13 is a configuration example of license information of an application;
[FIG. 14] FIG. 14 is a display example of an application in a long widget mode;
[FIG. 15] FIG. 15 is a display example of an application in a full screen mode;
[FIG. 16] FIG. 16 is a display example of an application in a video coexistence mode;
[FIG. 17] FIG. 17 is an operation flowchart of an application; and
[FIG. 18] FIG. 18 is an example of the widget system in a different display form.

### Description of Embodiments

In the following, an embodiment will be described with reference to the drawings.

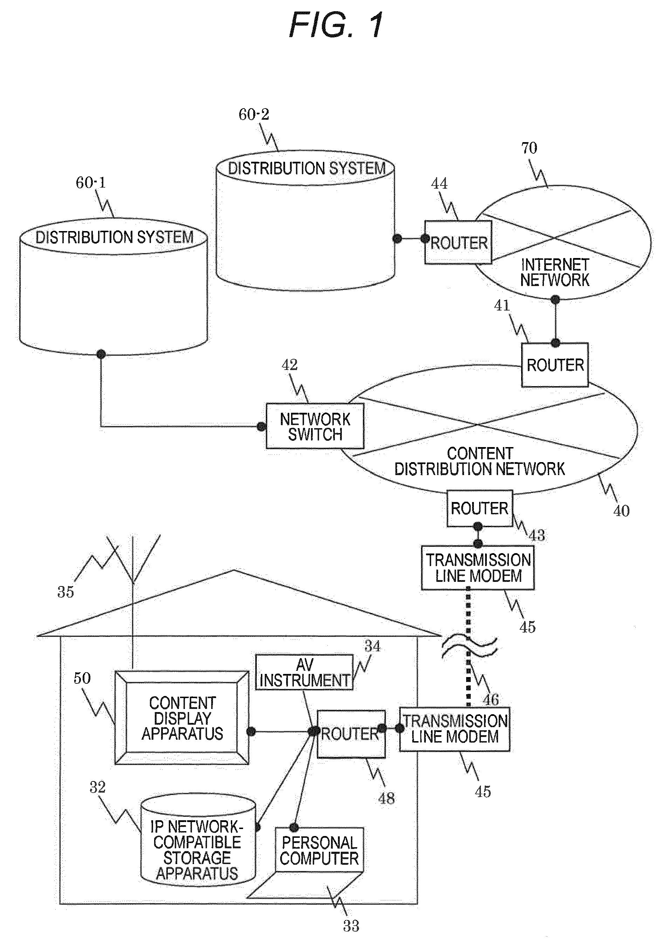

FIG. 1 is a configuration example of a content transmission/reception system. A distribution network includes a content distribution network 40 which secures network quality and an external Internet network 70 which is connected to the content distribution network 40 through a router 41. The content distribution network 40 is connected to a home through a router 43.

A distribution system 60 includes a distribution system 60-1 which is connected to the content distribution network 40 through a network switch 42 and a distribution system 60-2 which is connected through a router 44 to the Internet network 70 which gives weight to versatility. Note that only one of the distribution systems 60-1 and 60-2 may exist.

As network connection to the home, various communication paths 46 such as a coaxial cable, an optical fiber, an asymmetric digital subscriber line (ADSL), wireless communication, and the like are assumed. Modulation/demodulation suitable to each path is performed by a transmission line modem 45 and conversion into an Internet protocol (IP) network is performed.

An instrument at the home is connected to the content distribution network 40 through the router 43, the transmission line modem 45, and a router 48. As the instrument at the home, a content display apparatus 50, an IP network-compatible storage apparatus (network attached storage) 32, a personal computer 33, an AV instrument 34 which can be connected to a network, or the like is assumed. The content display apparatus 50 may also have a function to reproduce or accumulate a broadcast received through an antenna 35.

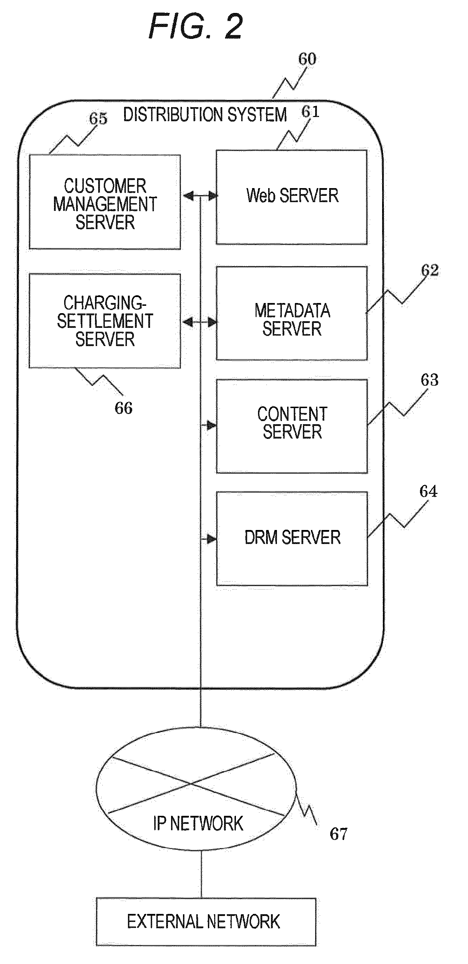

FIG. 2 is a configuration example of a content distribution system. The content distribution system 60 includes a web server 61, a metadata server 62, a content server 63, a DRM server 64, a customer management server 65, and a charging-settlement server 66. These servers are connected mutually through an IP network 67 and connected to the Internet network 70 or the content distribution network 40 in FIG. 1 through the IP network 67.

The web server 61 distributes a web document. The metadata server 62 distributes electric content guide (ECG) metadata which describes attribute information of distributed content and reproduction control information which describes information necessary for reproducing content. The content server 63 distributes a content body. The DRM server 64 distributes a license including key information necessary for decrypting content, which is necessary for a utilization right or utilization of the content. The customer management server 65 manages information of a customer of a distribution service. The charging-settlement server 66 performs charging and settlement processing of content by a customer.

Note that a part or all of the servers may be directly connected to the Internet network 45 or the content distribution network 40 not through the IP network 67 and may communicate mutually. Further, each of the servers may include, as a substance, a server in which a plurality of kinds of servers are integrated. Further, a several servers may not be included. In addition, a server, such as the metadata server 62, which is used to distribute a plurality of kinds of data may be divided for each kind of data.

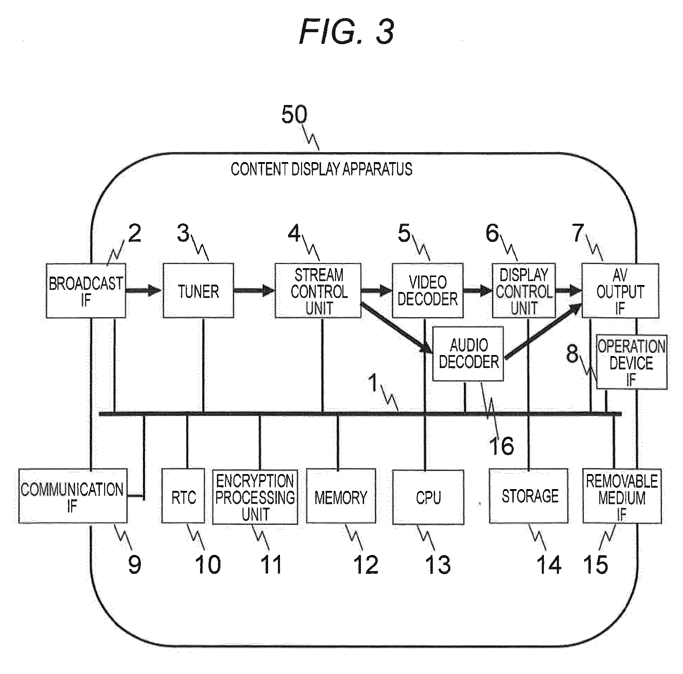

FIG. 3 is a configuration example of the content display apparatus. Heavy line arrows illustrate a flow of a video content.

The content display apparatus 50 includes a broadcast interface (IF) 2, a tuner 3, a stream control unit 4, a video decoder 5, a display control unit 6, an AV output IF 7, an operation device IF 8, a communication IF 9, a real time clock (RTC) 10, an encryption processing unit 11, a memory 12, a central processing unit (CPU) 13, a storage 14, a removable medium IF 15, and an audio decoder 16. These components are connected through a system bus 1.

The broadcast IF 2 inputs a broadcast signal. The tuner 3 demodulates and decrypts the broadcast signal. When the broadcast signal is encrypted, the stream control unit 4 decrypts the code and extracts a multiplexed packet from the broadcast signal. The video decoder 5 decrypts an extracted video image packet. The audio decoder 16 decrypts an extracted audio packet. Thus, reproduction of a broadcast is performed. The display control unit 6 displays a video image generated by the video decoder 5 or graphics generated by a CPU 13. The AV output IF 7 outputs, to an external television or the like, a video image signal generated by the display control unit 6 and an audio signal generated by the audio decoder 16.

Note that as the AV output IF 7, there is a video image-audio integrated IF such as a high-definition multimedia interface (HDMI). However, an IF, in which a video image and audio are independent, such as a composite video output terminal and an optical output audio terminal may be used. Further, a display device and an audio output device may be embedded into the content display apparatus 50.

The communication IF 9 is physically connected to the IP network and transmits/receives an IP data packet. At that time, processing of various IP communication protocols, such as a transmission control protocol (TCP), a user datagram protocol (UDP), a dynamic host configuration protocol (DHCP), a domain name server (DNS), and a hyper text transfer protocol (HTTP) is performed.

The RTC 10 manages time of the content display apparatus 50. When performing a timer operation of a system or limiting utilization according to time of content, the RTC 10 also performs management thereof.

The encryption processing unit 11 performs processing of encrypting and decrypting a code, which is for protecting content or a communication transmission line, at a high speed.

As the storage 14, a large-capacity accumulation device or the like such as an HDD, which accumulates content, metadata, management information and the like, is assumed. As the removable medium IF 15, an IF such as a memory card, a USB memory, a removable HDD, an optical medium drive, or the like is assumed.

As an operation device connected to the operation device IF 8, various forms such as a touch device like an infrared remote controller or a smartphone, a mouse, and a speech recognition unit are considered.

Note that in a case of a content display apparatus 50 which does not include a broadcast receiving function and only receives a video distribution from the Internet, a video image audio stream received from the communication IF 9 is transmitted to the stream control unit 4 through a bus. Thus, the broadcast IF 2 and the tuner 3 may be omitted. The storage 14 and the removable medium IF 15 may also be omitted in a case of a content display apparatus 50 in which those components are not used in the application.

The broadcast IF 2, the tuner 3, the stream control unit 4, the video decoder 5, the audio decoder 16, the communication IF 9, the RTC 10, the encryption processing unit 11, the memory 12, the CPU 13, the storage 14, the display control unit 6, the operation device IF 8, the removable medium IF 15, and the AV output IF 7 may be realized in hardware, for example, by forming an integrated circuit with all or a part thereof integrated as a processing unit. Further, all or a part of the tuner 3, the stream control unit 4, the video decoder 5, the audio decoder 16, and the encryption processing unit 11 may be realized in software by a processing program realized by the CPU 13 and the memory 12.

In the following, to simplify the description, in respect to each kind of processing realized by execution of various programs by a central control unit or the like, each processing unit realized by the programs is described mainly. Note that when each processing unit is realized in hardware, the processing unit mainly performs the processing.

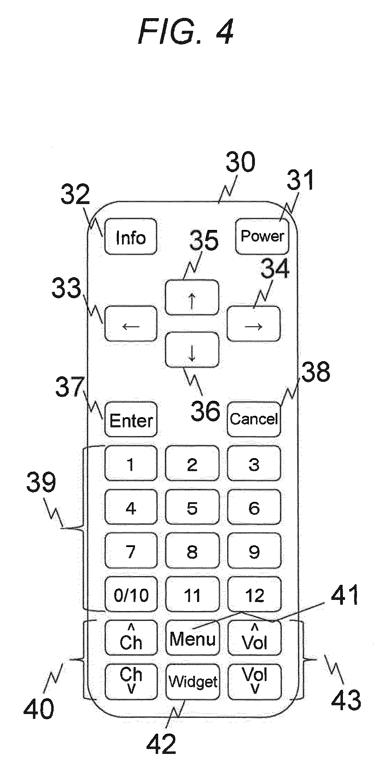

FIG. 4 is a configuration example of a remote controller of the content display apparatus. The remote controller 30 as an example of the operation device connected to the operation device IF 8 includes a plurality of operation buttons. When the button is pushed, the CPU 13 instructs the content display apparatus 50 according to the pushed button.

The remote controller 30 includes a Power button 31 to turn ON/OFF a power, an Info button 32 to display detailed information, cursor buttons (left cursor button 33, right cursor button 34, up cursor button 35, down cursor button 36) to operate a graphical user interface (GUI) screen, an Enter button 37 to instruct determination of an operation, a Cancel button 38 to instruct canceling of an operation, a numeric button 39 to perform, for example, selection of a broadcast or input of a numeric value or a character, a channel selection button 40 to perform up-down selection of a channel, a Menu button 41 to display a menu, a volume button 43 to turn up/down volume, and a Widget button 42 to activate a widget system.

Note that a dedicated button which can directly and automatically activate a specific Widget from the widget system may be provided additionally.

In an operation of the GUI screen displayed by the display control unit 6, a focus which indicates an object to be operated on the GUI is moved by the up, down, left, and right cursor buttons (33 to 36) of the remote controller 30 and execution is instructed by pressing of the Enter button 37.

Next, an example of a screen display output from the AV output IF 7 of the content display apparatus 50 will be described with reference to a flowchart of a program executed by the CPU 13 and the memory 12.

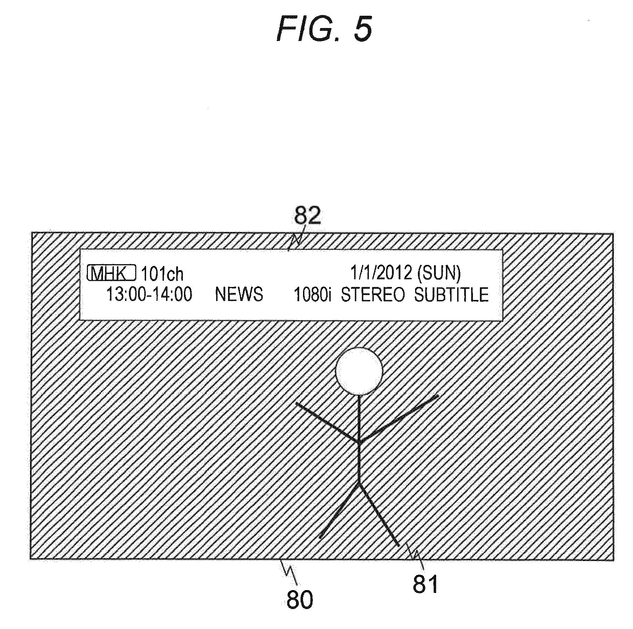

FIG. 5 is a video display example of the content display apparatus. On a display screen 80, a video 81 by a broadcast or Internet streaming is displayed. On a banner 82, in a case of a broadcast, detailed attribute information such as a broadcast station name, a channel, an on-air program name and airtime, current date and time information, a video image, a sound, and a subtitle is displayed. In a case of on-demand streaming distribution, detailed attribute information such as a content name, a length of content, a reproduction position from the head of content, current date and time information, a video image, a sound, and a subtitle is displayed.

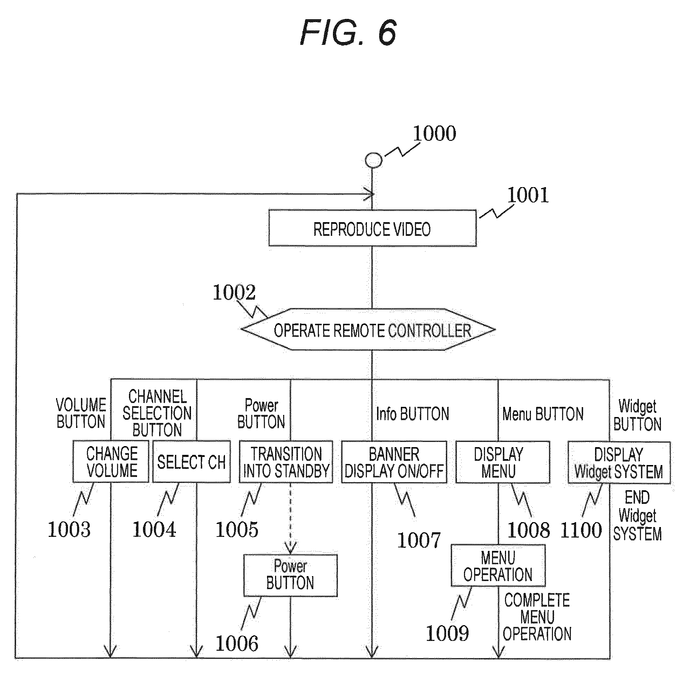

FIG. 6 is a system flowchart of the content display apparatus. In the power ON state, the CPU 13 reproduces a video (1001) and receives a remote controller operation (1002). In a case where the operated button of the remote controller 30 is the volume button 43, the CPU 13 changes volume (1003). In a case of the channel selection button 40, the CPU 13 performs processing of channel selection (1004), and in a case of the Power button 31, transition into a standby state is performed (1005). When the Power button 31 is pressed again, the standby state is restored to the power ON state (1006).

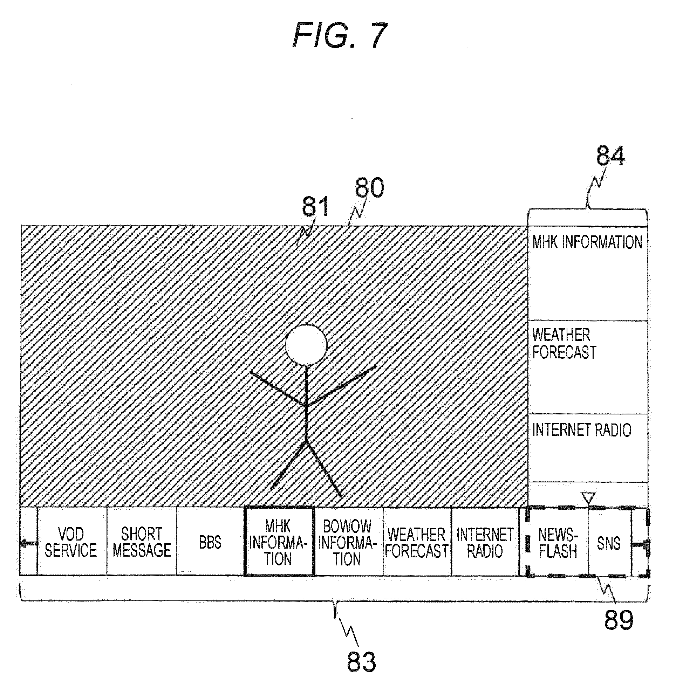

These operations are performed in a similar manner in states of a screen in FIG. 7, FIG. 10, FIG. 14, FIG. 16, FIG. 17, and FIG. 18, and thus, description thereof is omitted in the following flowcharts. When the Info button 32 is pressed, it is possible to display or hide the banner 82 by a toggle operation (1007). When the Menu button 41 is pressed, it is possible to select various functions of the content display apparatus 50 and to display a menu for various settings (1008), and it is also possible to operate the menu by using up, down, left, and right cursor buttons (1009).

Here, when the Widget button 42 is pressed, the widget system is activated and transition into a widget system display state is performed (1100).

FIG. 7 is a display example of the widget system in the content display apparatus 50. The widget system includes an app menu 83 in which an application program available for the content display apparatus 50 is selected and a widget list 84 to display a list of widgets in each of which a GUI of the activated app is displayed in a small window size.

On a screen in FIG. 7, the video 81 is reduced and displayed without a change in an aspect ratio. The app menu 83 is displayed on the lower side of a screen area which becomes unoccupied by the reduction and the widget list 84 is displayed on the right side of the screen area. These display positions may be any of upper, lower, left, and right positions of the video image.

Note that a broken line 89 illustrates an overlap area of the app menu 83 and the widget list 84. The example in FIG. 7 is in a widget system initial display state, and thus, the app menu 83 is given priority and displayed first. An app on the menu can be identified by an app name or an icon pattern. A selected app is displayed with a thick frame (here, "NHK information" is selected).

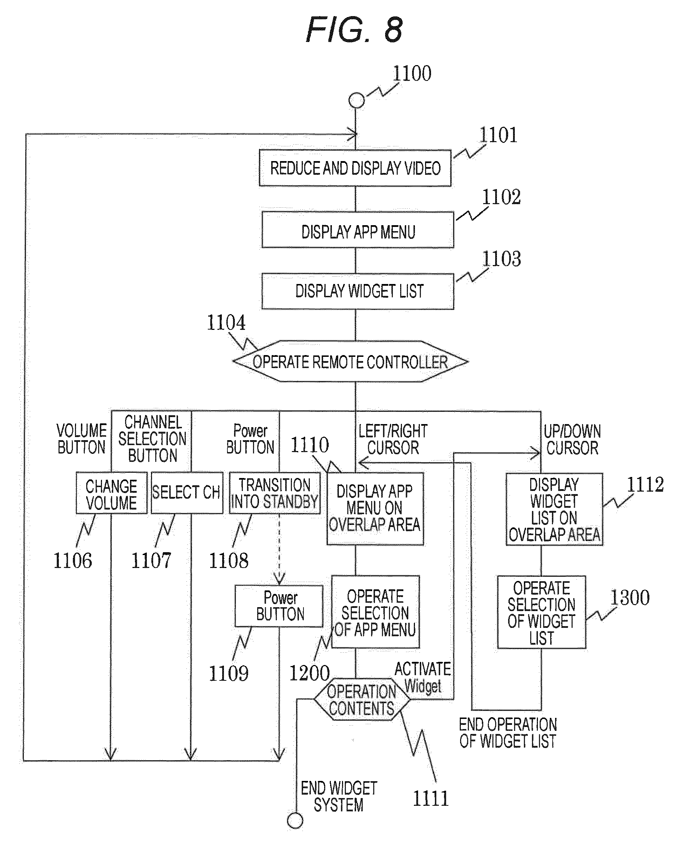

FIG. 8 is an operation flowchart of the widget system. First, the CPU 13 reduces and displays a video (1101). Then, the CPU 13 displays the app menu 83 (1102) and displays the widget list 84 (1103), and receives a remote controller operation (1104). Here, when the left and right cursor buttons (33 and 34) are pressed, the app menu 83 is displayed with the overlap area 89 being occupied by the app menu 83 (1110) and transition into an operation state of the app menu 83 is performed (1200).

On the other hand, when the up and down cursor buttons (35 and 36) are pressed in this step (1104), the CPU 13 displays the widget list 84 with the overlap area 89 being occupied by the widget list 84 (1112) and transition into a selection operation state of the widget list 84 is performed (1300).

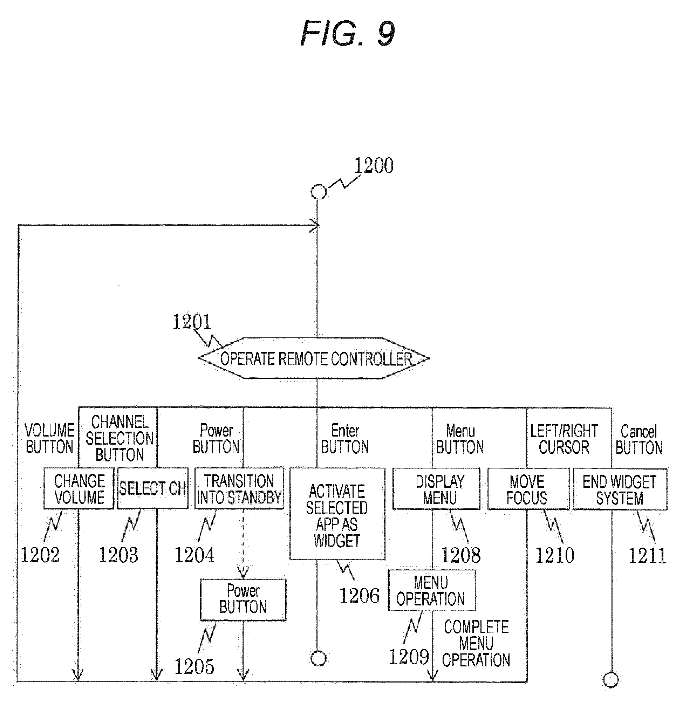

FIG. 9 is an operation flowchart of the app menu 83. On the screen in FIG. 7, when the Menu button 41 is pressed, an operation menu of the app menu 83 is displayed (1208) and an edit operation, such as adding, deleting, and sorting of an item of the app menu 83 can be performed (1209). When the Cancel button 38 is pressed, the widget system ends (1211) and the content display apparatus goes back to the video reproduction state in FIG. 5.

Further, when the focus to select an application is moved by the left and right cursor buttons (33 and 34) (1210) and the Enter button 37 is pressed, the selected application is activated as a widget and is added to the widget list 84 (1206).

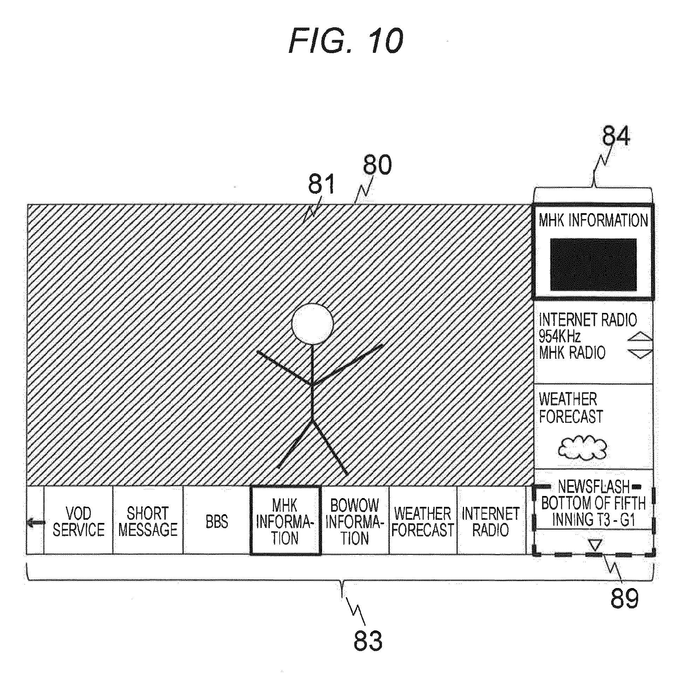

Then, since contents of the operation in FIG. 8 (1111) are widget activation, the widget list 84 is displayed with the overlap area 89 being occupied by a widget area as illustrated in FIG. 10 (1112) and transition into the selection operation state of the widget list 84 is performed (1300).

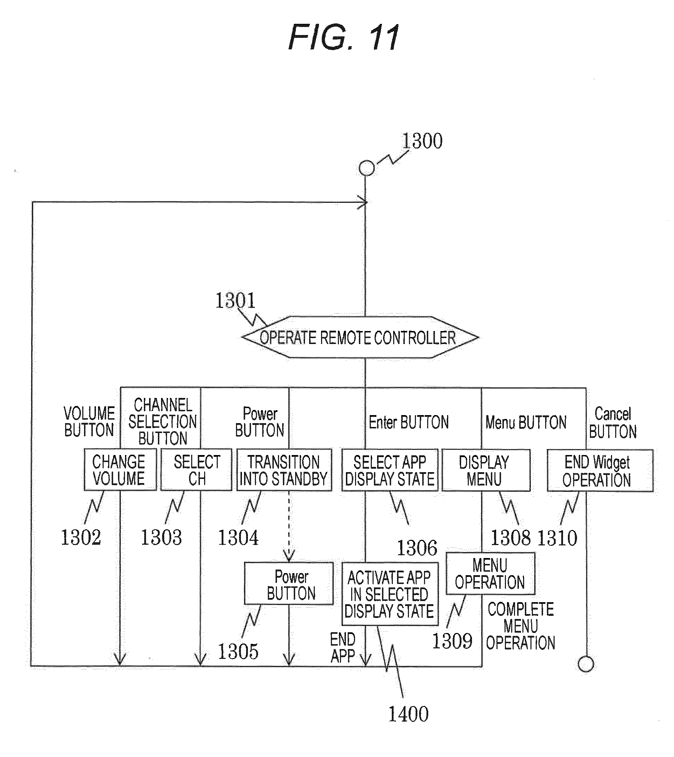

FIG. 10 is a display example of the widget system in the content display apparatus. FIG. 11 is an operation flowchart of the widget list of the widget system.

In this screen, when the Menu button 41 is pressed, an operation menu of the widget list 84 is displayed (1308) and an edit operation such as ending and sorting the widget list 84 can be performed (1308). When the Cancel button is pressed, the selection operation state of the widget list 84 ends (1310) and a state goes back to the selection operation state of the app menu 83 in FIG. 7. Further, when the focus to select a widget is moved by the up and down cursor buttons (35 and 36) (1310) and the Enter button 37 is pressed, a display state to display the selected widget is selected (1306) and a screen of an application is displayed according to the selected display state (1400).

Then, since the contents of the operation in FIG. 8 (1111) are widget activation, the widget list 84 is displayed with the overlap area 89 being occupied by the widget area as illustrated in FIG. 10 (1112) and transition into the selection operation state of the widget list 84 is performed (1300).

An application which operates on the content display apparatus 50 which has been described above is downloaded from the content server 63 and registered by one kind of application called a market application, which searches an application pre-installed in the content display apparatus 50 and registers the application into the content display apparatus 50. The registered application is displayed in the app menu 83.

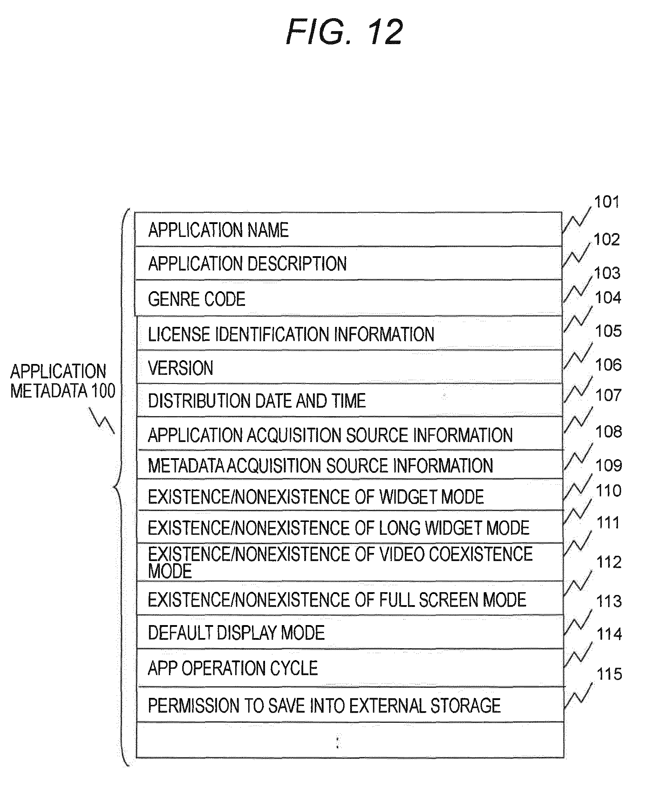

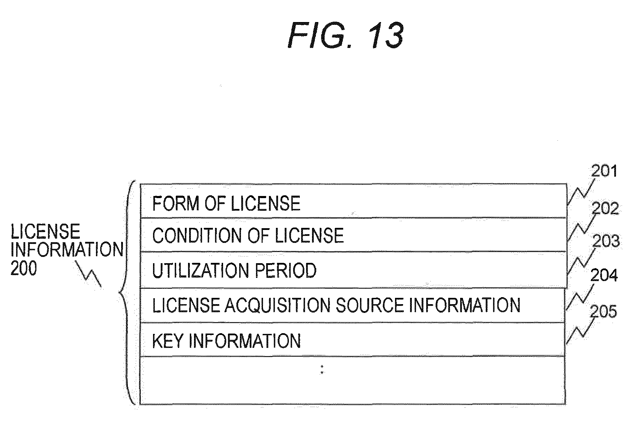

FIG. 12 is a configuration example of application metadata. When an application is registered, application metadata 100 corresponding to the application is acquired from the metadata server 62 in FIG. 2 and is used as management information of the application. Further, in a case where the application is fee-based, after a user is authenticated by the customer management server 65 and charging processing is performed through the charging-settlement server 66, license information illustrated in FIG. 13 is acquired from the DRM server 64 and management of a utilization condition of the application is performed.

The application metadata 100 includes an application name 101, application description 102, a genre code 103, license identification information 104, a version of a program 105, distribution date and time 106, application acquisition source information 107, metadata acquisition source information 108, existence/nonexistence of a widget mode 109, existence/nonexistence of a long widget mode 110, existence/nonexistence of a video coexistence mode 111, existence/nonexistence of a full screen mode 112, a default display mode 113, an app operation cycle 114, permission to store into an external storage 115, and the like.

When there is corresponding license information, the license identification information 104 indicates an identifier(ID) to identify the license information. The application acquisition source information 107 indicates, for example, a URL of a program acquisition source. The metadata acquisition source information 108 indicates, for example, a URL of an acquisition source of the application metadata 100.

Further, an application can have at least four states, that is, a widget mode, a long widget mode, a video coexistence mode, and a full screen mode. In the widget mode, a display at a fixed size in the widget list 84 is possible. Further, only a display of a service provided by an application is performed and it is not possible to perform an operation on the service provided by the application. In the long widget mode, the video coexistence mode, and the full screen mode, along with a display of a service provided by an application, an operation can be performed, through a GUI screen, on the service provided by the application. In the full screen mode, a video is not displayed and an application is displayed on the full screen. On the other hand, in the video coexistence mode, by dividing a screen, an application is displayed while a video display is continued. In the long widget mode, an application is displayed on a display area of the widget list.

The application metadata 100 holds information whether each piece of metadata includes a function corresponding to each mode, as the existence/nonexistence of a widget mode 109, the existence/nonexistence of a long widget mode 110, the existence/nonexistence of a video coexistence mode 111, and the existence/nonexistence of a full screen mode 112. Further, information of the default display mode 113 which specifies, among the four modes, a screen mode mainly used as a default is included.

The app operation cycle 114 is specified in a case of making a plurality of activated apps operate in a cycle, for example, for an update of a screen. According to this cycle, an operation resource is assigned to the app. The permission to store into an external storage 115 is information which specifies whether to make it possible to store an application into an external storing medium such as a removable medium. By moving an application of an app, which is permitted to be stored, into an external medium, it is possible to save storage capacity of the memory 12 or the storage 14 of the content display apparatus 50.

According to these pieces of information, the CPU 13 performs processing such as downloading, updating, and searching of an application, and displaying of a list of applications.

FIG. 13 is a configuration example of license information of an application. The license information 200 includes, for example, information of a form of a license 201 such as sellout or rental, information of a condition of a license 202 such as copy of an application or the number of times of utilization, information of a utilization period 203 in a case of the rental, license acquisition source information 204 which indicates an acquisition source server of license information, and key information 205 to decrypt an encrypted application when an application is encrypted.

In respect to an application with a license, according to the license information 200, the content display apparatus 50 monitors conditions such as copying, the number of times of utilization, and a utilization period and makes it possible to operate the application within the conditions. When the conditions of utilization are not satisfied, the content display apparatus 50 displays to a user an error message of an expired license and does not perform an operation of the application. A user interface (UI) which prompts to reacquire a license may be posted.

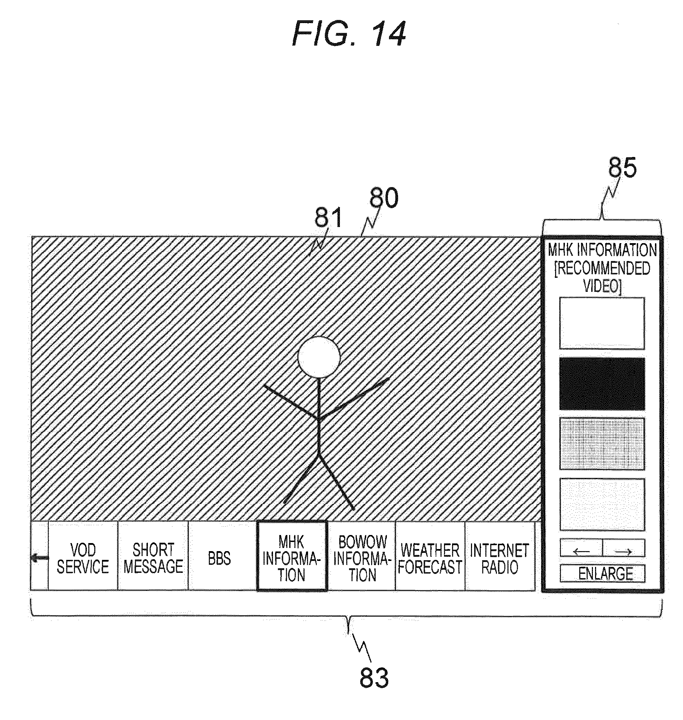

FIG. 14 is a display example of an application in the long widget mode, which is activated from the widget state in FIG. 10. In the mode, a whole display region of the widget list is used to display an operation screen 85 of the application.

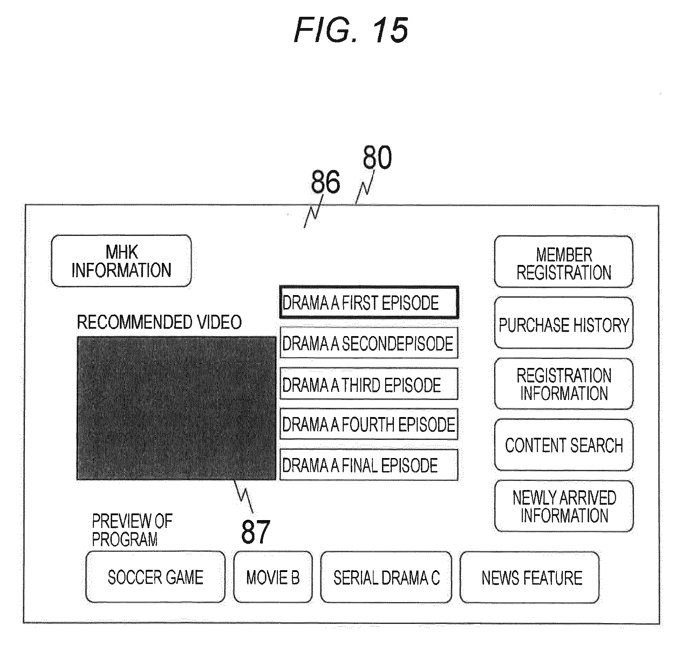

FIG. 15 is a display example of an application in the full screen mode, in which a video is hidden and an operation screen of the application is displayed in a full screen.

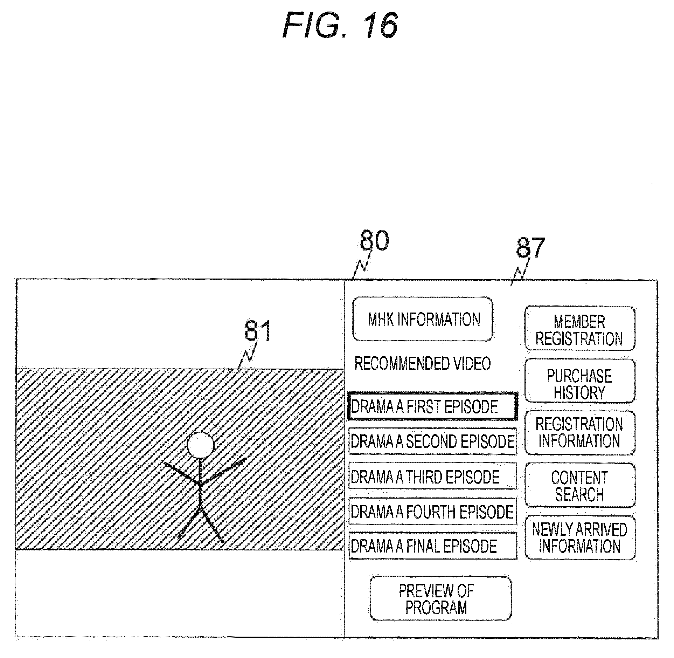

FIG. 16 is a display example of an application 86 in the video coexistence mode, in which an operation screen 87 of the application is displayed on a right half while a video is kept displayed on a left half.

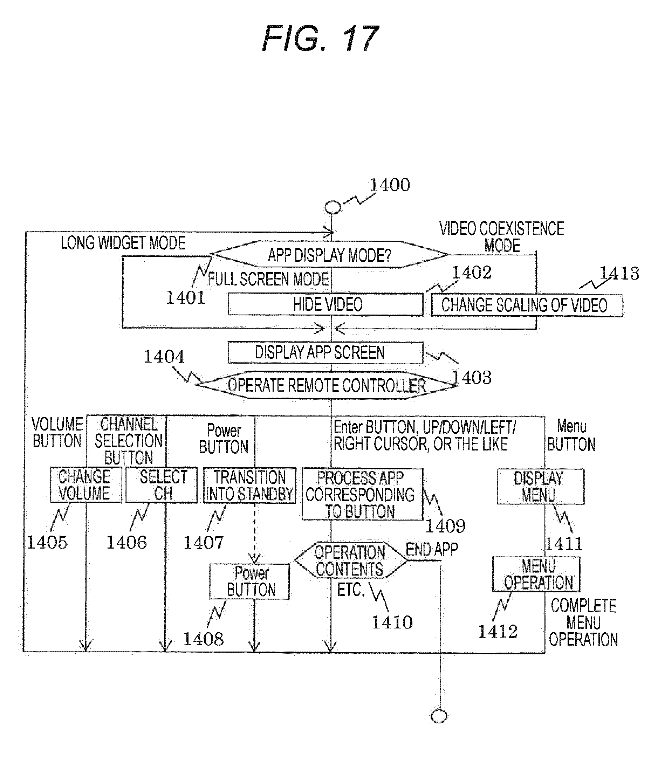

FIG. 17 is an operation flowchart of an application. First, the CPU 13 determines a display mode of an activated application (1401), and hides a video in a case of the full screen mode (1402) and displays a screen of the application in a full screen (1403). In a case of the video coexistence mode, scaling of a video is changed to a size and a position in a screen divided state (1413) and a screen of the application is displayed in the remaining part. In a case of the long widget mode, scaling state of a video is not changed and a screen of the application is displayed on an area of the widget list.

When the display is finished, an operation of a remote controller is received (1404) and the focus for an operation object, which is displayed in the screen of the application, is moved by up, down, left, and right cursor buttons (33, 34, 35, and 36) and determination is performed by the Enter button 37. Thus, an operation of the application is performed. Further, when the Menu button 41 is pressed, a menu for the application is displayed (1411), and operations such as ending and re-displaying the application, and making a screen go back or go forward can be performed (1412).

When the application ends by a UI operation of the application, it is possible to go back to the widget list operation screen in FIG. 10 and to select and activate a different application.

Note that other than a video such as a broadcast, a video instructed by the application can be displayed and reproduced in the application screen. For example, in the widget mode in FIG. 10, it is not possible to perform an operation of the application. However, the application can automatically display a promotion video such as a widget of "MHK information" without permission.

Further, as illustrated in FIG. 14, there may be an example in which a list of videos related to a main reproduction video such as a broadcast is displayed. A selected video is reproduced as demonstration in a thumbnail state and a video reproduction in a full screen is performed when the Enter button 37 is pushed. Note that in this case, a search is executed in the metadata server 62 with information such as a title, broadcast station information, a program ID, and a genre code, being used as a key. These pieces of information are from program information such as an EPG corresponding to the main reproduction video such as a broadcast, or from program metadata. Thus, metadata of a video related to the main reproduction video can be acquired and a list of videos related to the application can be displayed based on the acquired metadata.

In the full screen mode in FIG. 15, a video selected in the menu on the application screen 86 may be reproduced in a video display area 81 on the application screen. In a case of FIG. 16, a video selected in the menu on the application screen 87 may be reproduced as the main video 81. Further, an application which includes a plurality of screen modes may transition from one screen state to another by an operation of the application. Further, when an application is activated from the app menu operation screen 83, in respect to an application including no widget mode according to the application metadata 100, an effective mode among the full screen mode, the long widget mode, and the video coexistence mode is displayed as selection and activation may be performed in the selected mode.

Similarly, when an application is activated on the widget list operation screen 84, the application metadata 100 is referred to and an effective mode among the full screen mode, the long widget mode, and the video coexistence mode is displayed as selection, and activation may be performed in the selected mode. Further, when the default display mode 111 is specified in the app menu operation screen 83 and the widget list operation screen 84, choices of the screen mode may not be displayed to a user and an application may be directly displayed in a display mode specified as the default.

In a case of an application with a license, when a utilization period specified by the license has passed or the available number of times of utilization is consumed, the appropriate application may be automatically deleted in the app menu operation screen 83 and in the widget list operation screen 84. Alternatively, instead of automatic delete, a display may be kept in a masked state in which activate operation other than delete or reacquisition of a license cannot be performed.

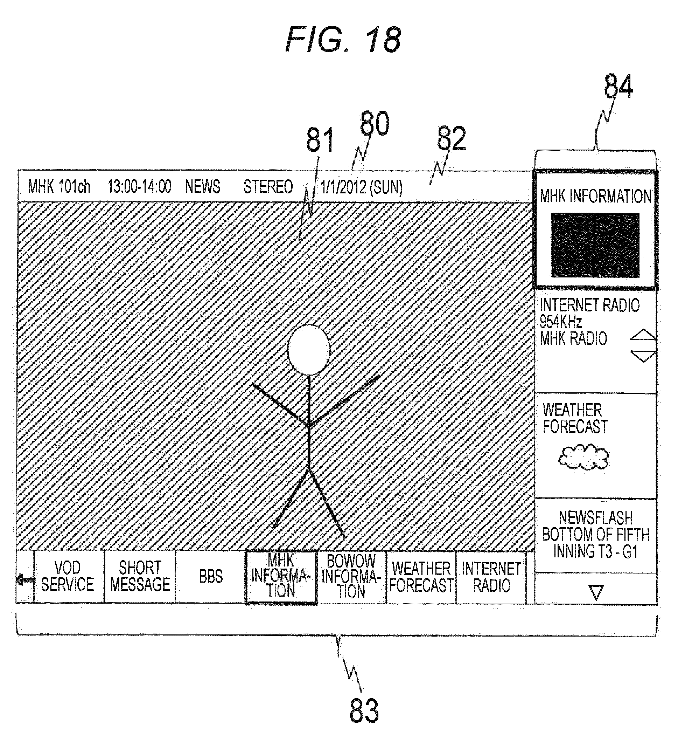

Further, a different example of a display form of the widget system can be considered. In the considered form, as illustrated in FIG. 18, a banner display 82 is added to an outer side of a video display 81 to which scaling is performed without a change in an aspect ratio and a display size of a menu list is reduced accordingly. In this case, there is an advantage in which an area of the banner 82 can be used not only as a display area of information of a video image but also as a display area of an operation guidance of a widget, an error, and warning.

According to the embodiment above, in the content display apparatus 50, it is possible to use a screen effectively and to perform selection, activation, and display of an application easily with an operation device such as a remote controller while displaying a video. Thus, operability can be improved.

Note that the present invention is not limited to the embodiment described above and includes various modifications. For example, the embodiment described above is described in detail to make it easier to understand the present invention and is not necessarily limited to include all of the described configurations. Further, it is possible to replace a part of a configuration of an embodiment with a configuration of a different embodiment and it is also possible to add a configuration of a different embodiment to a configuration of an embodiment. Further, in respect to a part of a configuration of each embodiment, it is possible to add, delete, and replace a different configuration.

In addition, a part or all of each configuration, each function, each processing unit, each kind of processing means, and the like described above may be realized in hardware, for example, by designing as an integrated circuit. Further, each configuration, function, and the like described above may be realized in software by a processor interpreting and executing a program which realizes each function. Information, such as a program to realize each function, a table, a file, and the like can be stored in a storage apparatus such as a memory, a hard disk, a solid state drive (SSD), or the like or in a storage medium such as an IC card, an SD card, a DVD, or the like.

Further, a control line and an information line, which are necessary for description, are illustrated and all of the control lines and information lines of a product may not be necessarily illustrated. Practically, it may be considered that almost all configurations are connected mutually.

According to the present embodiment, a content display apparatus including an application management function can be provided. With the function, an application is selected and displayed as a widget and an operable application screen is displayed in an efficient screen configuration by an operation device such as a remote controller, while a scaling display of a video is performed.

### Reference Signs List

- 80: display screen
- 81: video image
- 83: app menu
- 84: widget list
- 89: overlap area

## Claims

1. A content display apparatus (50) comprising a display control unit (6) configured to display a user interface of a video and an application on a screen, **characterized in that**
the display control unit (6) divides the screen into a first region on which the video is reduced and displayed, a second region on which a list of applications is displayed, and a third region on which detailed information of a selected application among the applications is displayed,
the second region and the third region are superimposed,
the list of applications is displayed on the third region in an operation state of the list of applications, and
a list of application display screens is displayed on the second region in an operation state of the list of application display screens.

2. The content display apparatus (50) according to claim 1, **characterized in that** on an application display screen displayed in the list of application display screens, a video specified by the application is displayed without an operation of a user.

3. The content display apparatus (50) according to claim 1, further comprising means configured to acquire, from an external, an application and application description information including information of an executable screen mode of the application, **characterized in that**
in the operation state of the list of applications, when activation of the application is instructed, the application description information is referred to and the executable screen mode is displayed as a choice, and an application screen is displayed in a selected screen mode.

4. The content display apparatus (50) according to claim 1, further comprising means configured to acquire, from an external, an application and application description information including information of an executable screen mode of the application and a screen mode to be displayed as default, **characterized in that**
in the operation state of the list of applications, when activation of the application is instructed, the application description information is referred to and an application screen is displayed in the screen mode to be displayed as default.
